# FASCICULE DE BREVET EUROPEEN

(11) **EP 3 606 725 B1**
(45) Date de publication et mention de la délivrance du brevet: **09.06.2021**
(21) Numéro de dépôt: 18718610.1
(22) Date de dépôt: 03.04.2018
(51) Int. Cl.: B29C 51/26, B29C 51/42, B29C 51/44, B29C 33/30, B65B 47/02, B65B 9/04, B65B 29/02, B29C 51/10

(54) **DISPOSITIF DE FABRICATION CONTINUE DE RÉCIPIENTS MULTI-FORMATS ET PROCÉDÉ DE FABRICATION ASSOCIÉ**
VORRICHTUNG ZUR KONTINUIERLICHEN HERSTELLUNG VON MEHRFORMATIGEN BEHÄLTERN UND ZUGEHÖRIGES HERSTELLUNGSVERFAHREN
DEVICE FOR THE CONTINUOUS MANUFACTURE OF MULTI-FORMAT CONTAINERS AND ASSOCIATED MANUFACTURING METHOD

(30) Priorité: 06.04.2017 FR 1752989
(43) Date de publication de la demande: 12.02.2020
(73) Titulaire: Industrial Design For Foods Cups, Toulouse 31500 (FR)
(72) Inventeur: CHIA, Christian, 31500 Toulouse (FR)
(74) Mandataire: Ipside
(86) Numéro de dépôt international: PCT/FR2018/050831
(87) Numéro de publication internationale: WO 2018/185427

(56) Documents cités:
- EP-A1- 0 516 556
- EP-A1- 2 653 499
- EP-A1- 3 112 115
- WO-A1-2004/069522
- WO-A1-2012/119913
- WO-A1-2012/120031
- FR-A1- 2 949 708
- JP-A- H05 192 990

## Description

### Domaine de l'invention

La présente invention s'applique au domaine du thermoformage.

Plus particulièrement, la présente invention s'applique au domaine de fabrication de récipients par thermoformage.

La présente invention vise un dispositif de fabrication continue de récipients par thermoformage et un procédé associé.

### Etat de l'art

Les récipients classiques de l'industrie alimentaire, tels que les pots de yaourt, comportent généralement une forme variable et une collerette sur laquelle vient être soudé un opercule pour fermer hermétiquement le récipient rempli.

De manière générale, les récipients sont produits à l'unité ou par groupe de deux ou plus. Dans le processus industriel de fabrication de ces groupes de récipients, une quantité d'empreintes détermine une quantité de récipients obtenue par groupe de récipients. Les récipients au sein d'un groupe sont séparés par des entraxes. L'encombrement est le terme utilisé pour donner le nombre de récipients maximal par groupe de récipients, pour une taille de récipients donnée.

La fabrication de tels récipients contenant des aliments, peut être réalisée à l'aide de différents dispositifs connus :
- le dispositif remplissage/fermeture ou dispositif FS (pour « *Fill, Seal* » en terminologie anglo-saxonne) qui est construit sur une chaîne de support pour recevoir des récipients formés à l'extérieur du dispositif FS. La logistique de ce dispositif demande de l'espace de stockage pour les récipients préformés et une décontamination de ces récipients avant remplissage. Un tel dispositif comprend en général à la chaîne, un appareil dépileur de récipients préformés, un appareil doseur, un appareil dépileur de feuilles opercules, une presse de soudure pour fermer les récipients remplis en soudant un opercule sur la collerette de chaque récipient et un extracteur de récipients remplis.
- le dispositif formage/remplissage/fermeture ou dispositif FFS (pour « *Form, Fill, Seal* » en terminologie anglo-saxonne) qui comprend le thermoformage du récipient. Ce dispositif comprend de manière générale à la chaîne, une bobine plastique d'une certaine largeur, une boite de chauffe pour chauffer le plastique déroulé de la bobine, une presse de formage, un appareil doseur, un dérouleur de bobine opercule, une presse de soudure pour fermer les récipients remplis en soudant un opercule sur chaque récipient, une presse de découpe pour séparer les récipients entre eux ou les groupes de récipients entre eux, et un extracteur de récipients remplis ou groupes de récipients remplis. La largeur de la bobine plastique et le pas d'avance du plastique déterminent un encombrement de récipients, principalement dans la découpe de la collerette des récipients. En d'autres termes, un tel dispositif ne permet de produire qu'un seul format de récipients, ledit format étant dépendant de la largeur de la bobine de plastique et du pas d'avance du plastique. Pour réaliser des récipients de différents formats, il faut disposer aujourd'hui de plusieurs dispositifs FFS, chacun permettant l'obtention de récipients d'un format particulier.

Parmi des dispositifs et procédés de fabrication continue de récipient connus on peut citer ceux divulgués dans la demande de brevet européenne EP 0 516 556. Le document EP 0 516 556 décrit un dispositif selon le préambule de la revendication 1.

Le dispositif de fabrication décrit dans cette demande comporte un poste de découpe d'une bande de matière plastique thermoformable en des tronçons de bande successifs en amont d'un poste de thermoformage réalisant le formage des récipients grâce à l'action d'air comprimé et/ou de vide. Ce poste de thermoformage est agencé avec des postes de conditionnements autour d'un plateau entrainé en rotation pas à pas et supportant lesdits tronçons de bande.

La demande EP 3 112 115 divulgue un dispositif et une méthode de transport et moussage d'objets avec une composition chimiquement réactive. Le dispositif comporte plusieurs modules de transport transportant des unités de moulage le long d'une voie d'avancement le long de laquelle se produit un cycle de moussage dans les unités de moulage de sorte à obtenir les objets comportant une partie en mousse à la forme souhaitée. Un premier module de transport transporte des unités de moulage le long d'une première partie de voie sur laquelle se trouve différents postes (poste d'extraction des objets moulés, postes de préparation/chargement des unités de moulage,...). Un deuxième module de transport est configuré pour l'avance desdites unités de moulage en configuration fermée selon une deuxième partie de la voie pour permettre la polymérisation et la stabilisation de forme des objets moulés. Le dispositif comprend une unité de carrousel rotatif configuré pour fermer et transférer simultanément en faisant tourner lesdites unités de moulage, de la première partie de voie à la deuxième partie de voie. Le dispositif peut comporter un poste dédié au remplacement d'une unité de moulage par une autre.

La demande EP 2 653 499 divulgue une composition de résine d'acide polylactique contenant un additif capable de conférer à la résine d'acide polylactique une formabilité secondaire suffisante, la composition ayant une formabilité secondaire améliorée, en particulier une extensibilité et une propriété de thermoformage améliorées.

Par ailleurs, parmi les matériaux thermoformable utilisables pour le thermoformage de récipients, certains matériaux sont connus pour leur inconvénient de créer un phénomène de rétreint ou rétractation du récipient thermoformé lors de son refroidissement après le passage dans la presse de formage. Ce phénomène de rétreint provoque une déformation du récipient thermoformé qui empêche l'obtention du récipient à la forme souhaitée et le rend inutilisable. Pour pallier un tel inconvénient il est connu de maintenir le récipient dans la presse de formage, par l'action de pression de la presse, durant le refroidissement du récipient jusqu'à ce qu'il n'y ait plus de rétreint. Cette solution a pour inconvénient de ralentir la cadence de fabrication des récipients thermoformés et représente ainsi une énorme perte de temps au sein d'une chaine de production.

Pour des raisons économiques évidentes et de gain de place pour les installations industrielles, il apparait intéressant de proposer un dispositif permettant l'obtention de récipients de formats différents et de matériaux différents, à une cadence acceptable la plus élevée possible.

La présente invention vise à remédier aux inconvénients de l'art antérieur.

### Exposé de l'invention

À cet effet, selon un premier aspect, la présente invention vise un dispositif de fabrication continue de récipients par thermoformage comportant :
- un appareil d'alimentation configuré pour alimenter un carrousel avec au moins une feuille de matériau thermoformable selon un axe X d'avancement, ladite feuille ayant un format f et s'étendant selon un plan P ;
- un extracteur de récipients configuré pour extraire les récipients du dispositif de fabrication ;
- un appareil de chauffe configuré pour chauffer la feuille de matériau thermoformable ;
- une presse de formage configurée pour effectuer un thermoformage d'au moins un récipient par une action de pressage sur ladite feuille chauffée selon un axe Z perpendiculaire au plan P ;
ledit carrousel étant en outre configuré pour effectuer un transport discontinu, en circuit fermé, d'au moins une matrice de moule de la presse de formage, ladite matrice définissant un format de récipient choisi en fonction du format f et étant interchangeable avec une autre matrice de moule , chaque arrêt du transport définissant la position d'un poste d'arrêt pour la matrice de moule ;
au moins un arrêt du transport définissant la position d'un poste d'arrêt pour la matrice de moule dans la presse de formage de sorte à permettre le thermoformage dudit au moins un récipient dans ladite matrice de moule, au moins un arrêt du transport définissant la position d'un poste d'arrêt pour la matrice de moule au niveau de l'extracteur de récipients de sorte à permettre l'extraction dudit au moins un récipient et, au moins un arrêt du transport définissant la position d'un poste d'arrêt pour la matrice de moule permettant l'échange de ladite matrice de moule que transporte le carrousel avec une autre matrice de moule, ledit dispositif de fabrication continue comportant en outre des moyens de maintenir, lorsque le récipient (21) a été thermoformé, un vide d'air entre le récipient et la matrice de moule pendant le refroidissement du récipient (21) jusqu'à température ambiante et durant le transport discontinu de la matrice (33) de moule par le carrousel (32).

Le présent dispositif a pour avantage de permettre la fabrication en continu de récipients de formats différents. En effet, le dispositif permet le changement de matrice de moule avec une autre matrice de moule, ladite autre matrice de moule définissant un même format de récipient ou un format différent choisi en fonction du format f. Cela est réalisable du fait que le carrousel est configuré pour transporter une matrice de moule interchangeable et qu'au moins un arrêt du transport du carrousel définit la position d'un poste d'arrêt de ladite matrice de moule permettant l'échange de la matrice que transporte le carrousel avec une autre matrice de moule. La réalisation de récipients de différents formats avec un seul dispositif représente un avantage économique comparé à une installation industrielle comportant différents dispositifs, chacun étant respectivement attribué à la fabrication de récipients d'un format différent.

Le carrousel est ici définit comme un appareil de transport discontinu, en circuit fermé. N'importe quelle géométrie peut être attribuée à un tel circuit fermé ce qui permet un gain de place pour une installation industrielle.

Un autre avantage est qu'au niveau de chaque poste d'arrêt d'une matrice de moule peut être installé ou désinstallé un outil/appareil intervenant dans la fabrication des récipients comme par exemple un outil d'étiquetage des récipients. Ainsi, différents outils/appareils peuvent êtres installés au niveau de certains postes d'arrêt d'une matrice de moule en fonction du format et plus généralement du type de récipient que l'on souhaite fabriquer. La plupart des modes de réalisations définis par la suite font d'ailleurs intervenir de tels outils/appareils.

Par matrice de moule on entend un moule présentant l'empreinte de la pièce destinée à être créée, la pièce étant ici au moins un récipient.

Suivant des modes de réalisation préférés, l'invention répond en outre aux caractéristiques des revendications dépendantes.

Un tel dispositif est notamment avantageux car il permet la fabrication de récipients en matériau plastique créant normalement un effet de rétreint tel que le polypropylène. Le polypropylène étant un matériau recyclable, cela a donc pour avantage de permettre la fabrication de récipients recyclables.

Dans un mode de réalisation particulier, les moyens de maintenir un vide d'air entre le récipient et la matrice de moule comportent au moins un canal d'extraction d'air dans la matrice de moule, ledit canal reliant une empreinte du récipient dans la matrice de moule à un système d'extraction d'air, par exemple une pompe d'aspiration d'air.

Dans un mode de réalisation particulier, l'appareil d'alimentation comporte une bande continue de matériau thermoformable s'étendant selon le plan P et le dispositif comporte un appareil de découpage configuré pour découper ladite bande selon un axe Y perpendiculaire à l'axe X et selon un pas variable de sorte à former une feuille de matériau thermoformable ayant le format f et s'étendant selon le plan P, ledit appareil de chauffe étant configuré pour chauffer la bande continue ou la feuille et, la presse de formage étant configurée pour effectuer un thermoformage d'au moins un récipient par une action de pressage sur ladite feuille chauffée ou ladite bande continue chauffée selon un axe Z perpendiculaire au plan P.

L'expression bande continue est un abus de langage pour définir une bande d'une certaine longueur par exemple déroulée à partir d'une bobine.

L'appareil de découpage est positionné avant ou après ledit appareil de chauffe par rapport à l'avancement de la bande continue de matériaux thermoformable. L'appareil de découpage est positionné avant ladite presse de formage par rapport à l'avancement de ladite bande continue de matériaux thermoformable.

Dans un mode de réalisation particulier, le carrousel est configuré pour effectuer un transport discontinu, en circuit fermé, de plusieurs matrices de moules de la presse de formage, chaque matrice de moule définissant un format de récipient choisi en fonction du format f et étant interchangeable avec une autre matrice de moule, chaque arrêt du transport du carrousel définissant la position d'un poste d'arrêt pour chaque matrice de moule, au moins un arrêt du transport définissant la position d'un poste d'arrêt pour chaque matrice de moule dans la presse de formage de sorte à permettre le thermoformage dudit au moins un récipient dans la matrice, au moins un arrêt du transport définissant la position d'un poste d'arrêt pour chaque matrice de moule au niveau de l'extracteur de récipients de sorte à permettre l'extraction dudit au moins un récipient, et au moins un arrêt du transport définissant la position d'un poste d'arrêt pour chaque matrice de moule permettant l'échange de ladite matrice de moule que transporte le carrousel avec une autre matrice de moule.

Dans un mode de réalisation particulier, le dispositif comporte un appareil échangeur de matrices de moules configuré pour échanger au moins une matrice de moule que comporte le carrousel par une autre matrice de moule, au moins un arrêt du transport définissant la position d'un poste d'arrêt pour ladite au moins une matrice de moule au niveau dudit appareil échangeur de sorte à permettre l'échange par ledit appareil échangeur de ladite au moins une matrice de moule que transporte le carrousel avec une autre matrice de moule.

Dans un mode de réalisation particulier, le dispositif comporte au moins un appareil doseur configuré pour remplir au moins en partie le au moins un récipient avec une composition, au moins un arrêt du transport du carrousel définissant la position d'un poste d'arrêt pour chaque matrice de moule au niveau de l'appareil doseur de sorte à permettre audit appareil doseur de remplir au moins en partie ledit au moins un récipient.

Dans un mode de réalisation particulier, le dispositif comporte plusieurs appareils doseurs chacun étant configuré pour remplir au moins en partie le au moins un récipient avec une composition différente, des arrêts du transport du carrousel définissant des positions de postes d'arrêts pour chaque matrice de moule au niveau de chacun des appareils doseurs de sorte à permettre à chacun des appareils doseurs de remplir au moins en partie ledit au moins un récipient. Les appareils doseurs sont interchangeables entre eux et sont retirables du dispositif.

Ainsi, de manière avantageuse, des combinaisons de différentes compositions et de différents dosages sont alors possible pour remplir les récipients. Par exemple, dans l'industrie alimentaire, de tels récipients pourront facilement être remplis avec des compositions différentes telles que des compositions solides et des compositions liquides ou encore des compositions de viscosités différentes. Un exemple de différentes compositions alimentaires remplissant un récipient est du yaourt, de la mousse et de la confiture.

Dans un mode de réalisation particulier, le dispositif comporte un système d'alimentation configuré pour alimenter le dispositif en opercules et appliquer au moins un opercule sur le au moins un récipient, au moins un arrêt du transport du carrousel définissant la position d'un poste d'arrêt pour chaque matrice de moule au niveau du système d'alimentation de sorte à permettre audit système d'alimentation d'appliquer au moins un opercule sur ledit au moins un récipient.

Dans un mode de réalisation particulier, le dispositif comporte une presse de soudure configurée pour souder au moins un opercule sur le au moins un récipient, au moins un arrêt du transport du carrousel définissant la position d'un poste d'arrêt pour chaque matrice de moule au niveau de la presse de soudure de sorte à permettre à ladite presse de soudure de souder au moins un opercule sur ledit au moins un récipient.

Dans un mode de réalisation particulier, le dispositif comporte une presse de découpage configurée pour découper au moins une feuille comprenant plusieurs récipients thermoformés de sorte à séparer au moins en partie, au moins un récipient thermoformé d'un autre récipient thermoformé. Ainsi, lorsque plusieurs récipients sont thermoformés sur une même feuille et selon un quelconque encombrement, lesdits récipients peuvent être séparés complètement ou en partie les uns des autres. On entend par « séparer en partie » qu'un découpage est effectué entre les récipients mais qu'il permet que lesdits récipients restent encore attachés entre eux. Par exemple, pour un groupe de quatre récipients tous attachés entre eux, un tel découpage permettant de séparer en partie les récipients peut consister à découper une portion de forme prédéfinie de la découpe entre les quatre récipients. Dans un exemple de réalisation, au moins un arrêt du transport du carrousel définit la position d'un poste d'arrêt pour chaque matrice de moule au niveau de la presse de découpage de sorte à permettre à ladite presse de découpage, de séparer au moins en partie au moins un récipient thermoformé d'un autre récipient thermoformé.

Dans un mode de réalisation particulier, le dispositif comporte un système dépileur configuré pour dépiler et insérer dans une matrice de moule au moins un récipient préformé, au moins un arrêt du carrousel définissant la position d'un poste d'arrêt pour chaque matrice de moule au niveau du système dépileur de sorte à permettre audit système dépileur de dépiler et insérer dans chaque matrice de moule au moins un récipient préformé. Dans un tel mode de réalisation, on entend également par matrice de moule, un support présentant une empreinte configurée pour recevoir au moins un récipient préformé.

Un tel dispositif permet avantageusement de passer d'un marché test avec des récipients préformés à un marché production industrielle de récipients de même format mais thermoformés par le dispositif de la présente invention. En effet, la possibilité d'alimenter les matrices de moule en récipients préformés permet avantageusement d'étudier la rentabilité de ces récipients préformés sur le marché en produisant (remplissage, fermeture, extraction) une petite quantité de ces derniers et par la suite, en fonction de cette rentabilité, choisir de thermoformer en grande quantité de tels récipients ou non.

Selon un deuxième aspect, la présente invention vise un procédé de fabrication continue de récipients par thermoformage selon la revendication 11.

Les avantages, buts et caractéristiques particuliers du procédé objet de la présente invention étant similaires à ceux du dispositif objet de la présente invention, ils ne sont pas rappelés ici.

Dans un mode de mise en œuvre particulier, le procédé de fabrication continue comporte en outre une étape d'arrêt du transport de la matrice par le carrousel et remplissage au moins en partie dudit au moins un récipient avec une composition, ledit remplissage étant effectué avant l'extraction dudit au moins un récipient de la matrice de moule.

Dans un mode de mise en œuvre particulier, le procédé de fabrication continue comporte en outre une étape d'arrêt du transport de la matrice par le carrousel et fermeture dudit au moins un récipient avec au moins un opercule, ladite fermeture étant effectuée avant l'extraction dudit au moins un récipient de la matrice de moule.

Le maintien dudit au moins un récipient dans la matrice de moule par maintien de vide d'air entre ledit au moins un récipient et ladite matrice de moule permet de maintenir le récipient au format souhaité durant le refroidissement du récipient après thermoformage et ainsi d'éviter les risques de rétractation du matériau thermoformable entrainant une déformation du récipient. De plus, cela à pour avantage de ne pas ralentir la cadence de production des récipients car la matrice de moule n'a pas besoin de rester au poste d'arrêt dans la presse de formage pour que le vide soit maintenu entre le récipient et la matrice de moule.

Le vide est maintenu jusqu'à l'extraction dudit au moins un récipient de la matrice de moule. Cela a pour avantage d'éviter tout phénomène de rétreint qui pourrait être engendré par un refroidissement du récipient suite à un chauffage du récipient autre que celui provenant du thermoformage, entre le thermoformage et l'extraction du récipient, par exemple provenant du remplissage du récipient avec un produit chaud ou encore d'une presse de soudure d'opercule. Le temps de maintien du vide d'air entre ledit au moins un récipient et ladite matrice de moule est d'autant plus long qu'il y a de postes d'arrêt pour une matrice de moule.

Lorsque plusieurs récipients sont thermoformés dans une matrice de moule, avec le maintien des récipients dans ladite matrice de moule jusqu'à l'extraction, la matière entre deux récipients (collerette) peut être diminuée. Par exemple on peut obtenir une collerette de 2 mm par récipient soit une matière entre deux récipients de 4 mm. Dans un dispositif FFS classique il faut beaucoup de jeu pour que les récipients puissent rentrer dans les outillages de soudure et de découpe sans écrasement, on retrouve donc souvent des collerettes larges, par exemple d'au moins 4 mm, soit une matière entre deux récipients de 8 mm. Le dispositif de la présente invention permet donc de faire des économies de matériau thermoformable.

### Présentation des figures

L'invention sera mieux comprise à la lecture de la description suivante, donnée à titre d'exemple nullement limitatif, et faite en se référant aux figures qui représentent :
- Figure 1 : illustre un dispositif de fabrication continue de récipients par thermoformage selon un mode de réalisation particulier de la présente invention.
- Figure 2 : illustre une bande de matériaux thermoformable découpée selon un pas choisi et formant ainsi des feuilles de format f de matériau thermoformable, un encombrement de récipients pour le format f étant représenté sur une des feuilles.
- Figure 3 : illustre un dispositif de fabrication continue de récipients par thermoformage selon un mode de réalisation particulier de la présente invention, comportant plusieurs appareils doseurs.
- Figure 4 : illustre un dispositif de fabrication continue de récipients par thermoformage selon un mode de réalisation particulier de la présente invention, comportant un système dépileur configuré pour dépiler et insérer dans une matrice de moule au moins un récipient préformé.
- Figure 5 : illustre différents exemples d'alimentation du carrousel en feuilles de matériau thermoformable selon un axe X d'avancement (5A : perpendiculaire au transport de la matrice de moule ; 5B et 5C : tangent au transport de la matrice de moule ; 5D : parallèle au transport de la matrice de moule).
- Figure 6 : illustre un schéma d'enchainement d'étapes du procédé de fabrication continue de récipients par thermoformage selon un mode de mise en œuvre de la présente invention.

### Description détaillée de l'invention

On note dès à présent que les figures ne sont pas à l'échelle.

De manière plus générale, la portée de la présente invention ne se limite pas aux modes de mise en œuvre et de réalisation décrits ci-dessus à titre d'exemples non limitatifs, mais s'étend au contraire à toutes les modifications à la portée de l'homme de l'art. Chaque caractéristique d'un mode de réalisation peut être mise en œuvre isolément ou combinée à toute autre caractéristique de tout autre mode de réalisation de manière avantageuse.

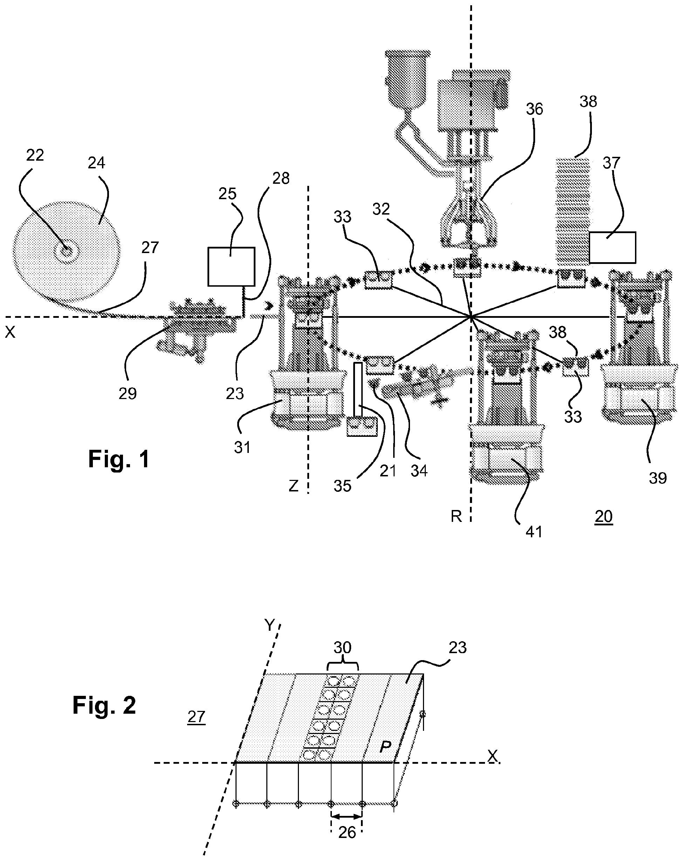

La figure 1 illustre un dispositif **20** de fabrication continue de récipients **21** par thermoformage objet de la présente invention.

Le dispositif 20 comporte un appareil d'alimentation **22** configuré pour alimenter un carrousel **32** avec au moins une feuille **23** de matériau thermoformable selon un axe X d'avancement de ladite feuille 23, ladite feuille 23 ayant un format f et s'étendant selon un plan P.

Comme illustré en figure 1 également, le dispositif 20 comporte un appareil de chauffe **29** configuré pour chauffer la feuille 23 de matériau thermoformable.

Le dispositif 20 comprend en outre une presse de formage **31** configurée pour effectuer un thermoformage d'au moins un récipient 21 par une action de pressage sur la feuille 23 chauffée selon un axe Z perpendiculaire au plan P.

Selon mode de réalisation, l'appareil d'alimentation 22 peut comprendre une bande **27** continue de matériau thermoformable par exemple sous forme d'une bobine **24** et des moyens de dérouler cette bobine 24. L'expression bande 27 continue est un abus de langage pour définir une bande 27 d'une certaine longueur. Une telle bande 27 est plus longue que la longueur d'une feuille 23. La bande 27 s'étend selon le plan P.

Lorsque l'appareil d'alimentation 22 comporte un telle bande 27 continue, le dispositif 20 de fabrication, tel que cela est illustré en figure 1, comporte en outre un appareil de découpage **25** configuré pour découper la bande 27 de matériau thermoformable selon un axe Y perpendiculaire à l'axe X tel qu'illustré en figure 2 et selon un pas **26** variable, de sorte à former une feuille 23 de matériau thermoformable ayant le format f et s'étendant selon le plan P. Le pas 26 est préalablement choisi dans l'axe X. Tel que cela est illustré en figure 2, l'axe X et l'axe Y appartiennent au plan P. L'appareil de découpage 25 peut comporter par exemple une lame **28** destinée à découper la bande 27 selon l'axe Y. Le format f permet de déterminer un encombrement **30** correspondant au nombre de récipients 21 maximal thermoformable par découpe 27, pour une taille de récipients 21 donnée.

Lorsque l'appareil d'alimentation 22 comporte la bande 27 continue, l'appareil de chauffe 29 est configuré pour chauffer la feuille 23 de matériau thermoformable ou la bande 27, et la presse de formage 31 est configurée pour effectuer un thermoformage d'au moins un récipient 21 par une action de pressage sur la feuille 23 chauffée ou la bande 27 continue chauffée, selon un axe Z perpendiculaire au plan P.

Tel que cela est illustré en figure 1, l'appareil de découpage 25 est positionné avant la presse de formage 31 par rapport à l'avancement de la bande 27 de matériaux thermoformable, autrement dit, sur le trajet de la bande 27. L'appareil de découpage 25 est également positionné après l'appareil de chauffe 29 par rapport à l'avancement de la bande 27. Ainsi, la bande 27 est d'abord chauffée et elle est découpée par la suite de sorte à obtenir la feuille 23. Dans un tel mode de réalisation, la bande 27 peut être découpée juste avant le thermoformage dudit au moins un récipient 21 par la presse de formage 31 ou consécutivement au thermoformage.

Dans un autre mode de réalisation particulier, au lieu d'être positionné après l'appareil de chauffe 29 par rapport à l'avancement de la bande 27, l'appareil de découpage 25 est positionné avant l'appareil de chauffe 29 par rapport à l'avancement de la bande 27. Dans un tel mode de réalisation la bande 27 est découpée en premier et la découpe 23 obtenue est ensuite chauffée et positionnée dans la presse de formage 31 pour thermoformer ledit au moins un récipient 21.

Encore dans un autre mode de réalisation, l'appareil de chauffe 29 et l'appareil de découpage 25 sont un seul et même appareil et le découpage de la bande 27 pour former la découpe 23 peut être effectué pendant la chauffe de la bande 27.

Encore dans un autre mode de réalisation, la presse de formage 31 et l'appareil de découpage 25 sont un seul et même appareil et le découpage de la bande 27 pour former la feuille 23 peut être effectué juste avant, pendant ou consécutivement après le thermoformage dudit au moins un récipient 21. On entend par « juste avant » le fait que dans ce cas là le thermoformage à lieu consécutivement après le découpage.

Le carrousel 32 est configuré pour effectuer un transport discontinu, en circuit fermé, d'au moins une matrice **33** de moule de la presse de formage 31, ladite matrice 33 définissant un format de récipient 21 choisi en fonction du format f et étant interchangeable avec une autre matrice 33 de moule. Chaque arrêt du transport discontinu définit la position d'un poste d'arrêt pour la matrice 33 de moule.

Selon un mode de réalisation, et tel qu'illustré en figure 1, le carrousel 32 est configuré pour effectuer un transport discontinu, en circuit fermé, de ladite au moins une matrice 33 de moule, ledit transport étant un mouvement de rotation discontinu autour d'un axe R parallèle à l'axe Z, chaque arrêt du mouvement de rotation définissant la position d'un poste d'arrêt pour la matrice 33 de moule.

Le dispositif 20 comporte un extracteur **34** de récipients 21 configuré pour extraire les récipients 21 du dispositif 20 de fabrication.

Il est essentiel qu'au moins un arrêt du transport définisse la position d'un poste d'arrêt pour la matrice 33 de moule dans la presse de formage 31 de sorte à permettre le thermoformage dudit au moins un récipient 21 dans ladite matrice 33 de moule par la presse de formage 31.

Il est également essentiel qu'au moins un arrêt du transport définisse la position d'un poste d'arrêt pour la matrice 33 de moule au niveau de l'extracteur 34 de récipients 21 de sorte à permettre l'extraction dudit au moins un récipient 21 par l'extracteur 34.

Il est aussi essentiel qu'au moins un arrêt du transport définisse la position d'un poste d'arrêt pour la matrice 33 de moule permettant l'échange de ladite matrice 33 de moule que comporte le carrousel 32 avec une autre matrice 33 de moule. A cet effet, dispositif 20 comporte un appareil échangeur **35** de matrices 33 de moule configuré pour échanger au moins une matrice 33 de moule que transporte le carrousel 32 par une autre matrice 33 de moule. Dans un tel mode de réalisation, au moins un arrêt du transport définit la position d'un poste d'arrêt pour ladite matrice 33 de moule que transporte le carrousel 32 au niveau dudit appareil échangeur 35 de sorte à permettre l'échange par ledit appareil échangeur 35 de cette matrice 33 de moule que transporte le carrousel avec une autre matrice 33 de moule.

Comme illustré en figure 1, le carrousel 32 peut transporter plusieurs matrices 33 de moules de la presse de formage 31, chaque matrice 33 de moule définissant un format de récipient 21 choisi en fonction du format f et étant interchangeable avec une autre matrice 33 de moule, chaque arrêt du transport du carrousel 32 définissant la position d'un poste d'arrêt pour chaque matrice 33 de moule, au moins un arrêt du transport définissant la position d'un poste d'arrêt pour chaque matrice 33 de moule dans la presse de formage 31 de sorte à permettre le thermoformage dudit au moins un récipient 21 dans la matrice 33, au moins un arrêt du transport définissant la position d'un poste d'arrêt pour chaque matrice 33 de moule au niveau de l'extracteur 34 de récipients 21 de sorte à permettre l'extraction dudit au moins un récipient 21, et au moins un arrêt du transport définissant la position d'un poste d'arrêt pour chaque matrice 33 de moule permettant l'échange d'au moins une matrice 33 de moule que transporte le carrousel 32 avec une autre matrice 33 de moule.

Comme cela est également illustré en figure 1, le dispositif 20 comporte au moins un appareil doseur **36** configuré pour remplir au moins en partie ledit au moins un récipient 21 avec une composition. Dans un tel mode de réalisation, au moins un arrêt du transport du carrousel 32 définit la position d'un poste d'arrêt pour chaque matrice 33 de moule au niveau de l'appareil doseur 36 de sorte à permettre audit appareil doseur 36 de remplir au moins en partie ledit au moins un récipient 21. Dans un mode de réalisation particulier, le dispositif 20 comporte au moins deux appareils doseurs 36, chacun étant configuré pour remplir au moins en partie ledit au moins un récipient 21 avec une même composition.

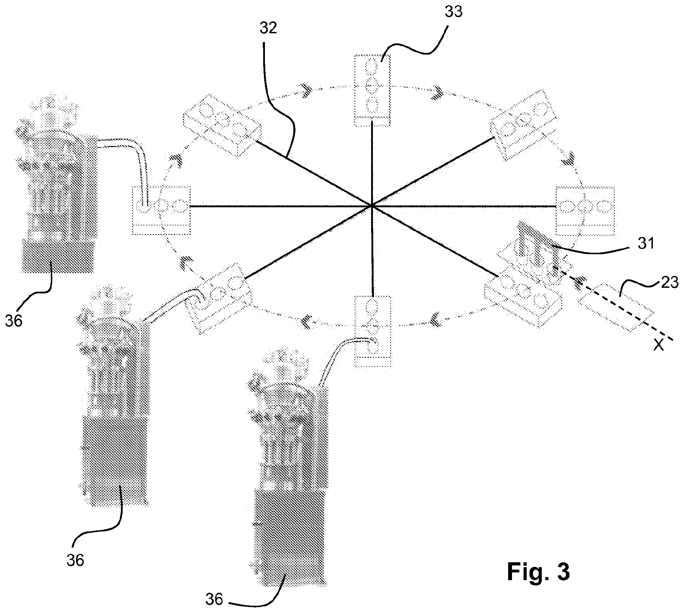

Tel que cela est illustré en figure 3, le dispositif 20 de la présente invention comporte plusieurs appareils doseurs 36 chacun étant configuré pour remplir au moins en partie ledit au moins un récipient 21 avec une composition. Chaque appareil doseur 36 peut remplir au moins en partie ledit au moins un récipient 21 avec une composition différente. Dans un tel mode de réalisation, des arrêts du transport du carrousel 32 définissent des positions de postes d'arrêts pour chaque matrice 33 de moule au niveau de chacun des appareils doseurs 36 de sorte à permettre à chacun des appareils doseurs 36 de remplir au moins en partie ledit au moins un récipient 21.

Le dispositif 20 peut comporter un système d'alimentation **37** configuré pour alimenter le dispositif 20 en opercules **38** et appliquer au moins un opercule 38 sur le au moins un récipient 21, au moins un arrêt du transport du carrousel 32 définissant la position d'un poste d'arrêt pour chaque matrice 33 de moule au niveau du système d'alimentation 37 de sorte à permettre audit système d'alimentation 37 d'appliquer au moins un opercule 38 sur ledit au moins un récipient 21.

Selon un exemple de réalisation et tel qu'illustré en figure 1, le système d'alimentation 37 est un appareil dépileur 37 configuré pour dépiler et appliquer au moins un opercule 38 sur ledit au moins un récipient 21. Dans un tel exemple de réalisation, au moins un arrêt du transport du carrousel 32 définit la position d'un poste d'arrêt pour chaque matrice 33 de moule au niveau de l'appareil dépileur 37 de sorte à permettre audit appareil dépileur 37 de dépiler et appliquer un opercule 38 sur ledit au moins un récipient 21.

Selon un autre exemple de réalisation (non illustré), le système d'alimentation 37 comporte une bobine de bande d'opercule ledit système d'alimentation 37 étant configuré pour découper ladite bande d'opercule de sorte à réaliser des opercules 38 et pour appliquer au moins un opercule 38 sur ledit au moins un récipient 21.

Le dispositif 20 comporte en outre une presse de soudure **39** configurée pour souder au moins un opercule 38 sur ledit au moins un récipient 21. Au moins un arrêt du transport du carrousel 32 définit la position d'un poste d'arrêt pour chaque matrice 33 de moule au niveau de la presse de soudure 39 de sorte à permettre à ladite presse de soudure 39 de souder au moins un opercule 38 sur ledit au moins un récipient 21.

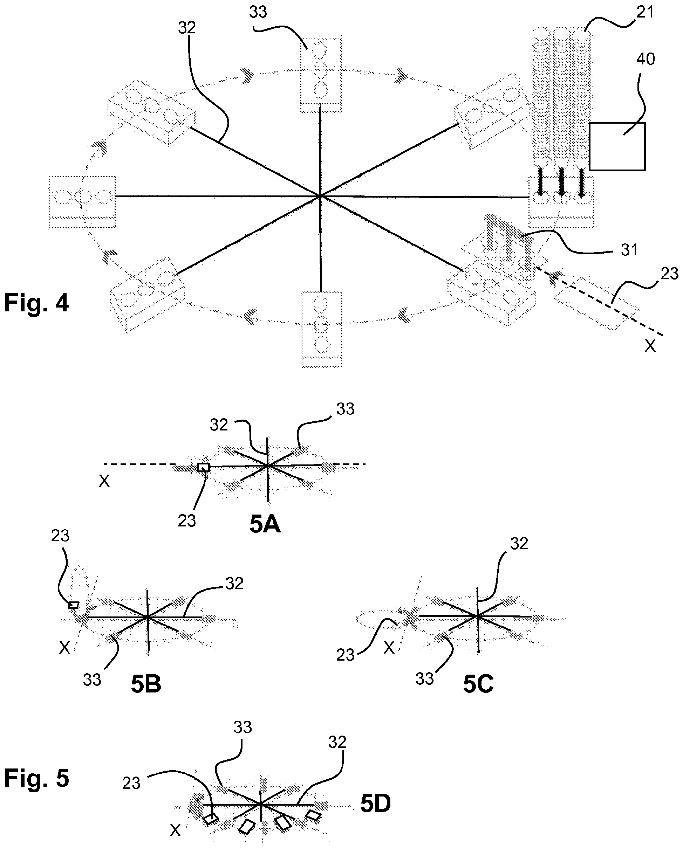

Le dispositif 20 peut en outre comporter un système dépileur **40** tel qu'illustré en figure 4, un tel système dépileur 40 étant configuré pour dépiler et insérer dans une matrice 33 de moule au moins un récipient 21 préformé. Au moins un arrêt du carrousel 32 définit la position d'un poste d'arrêt pour chaque matrice 33 de moule au niveau du système dépileur 40 de sorte à permettre audit système dépileur 40 de dépiler et insérer dans chaque matrice 33 de moule au moins un récipient 21 préformé.

Le dispositif 20 peut comporter une presse de découpage **41** configurée pour découper au moins une découpe 27 comprenant plusieurs récipients 21 thermoformés de sorte à séparer au moins en partie au moins un récipient 21 d'un autre récipient 21. Dans un exemple de réalisation, au moins un arrêt du transport du carrousel 32 définit la position d'un poste d'arrêt pour chaque matrice 33 de moule au niveau de la presse de découpage 41 de sorte à permettre à ladite presse de découpage 41, de séparer au moins en partie au moins un récipient 21 thermoformé d'un autre récipient 21 thermoformé. Dans un autre exemple de réalisation, aucun arrêt du transport du carrousel 32 ne définit la position d'un poste d'arrêt pour chaque matrice 33 de moule au niveau de la presse de découpage 41. Dans ce dernier exemple, la presse de découpage 41 peut être positionnée a proximité de tout élément du dispositif 20, détachée du carrousel 32.

La figure 5 illustre différents modes de réalisation de l'alimentation du carrousel 32 en feuilles 23 de matériau thermoformable. La figure 5A illustre une alimentation selon un axe X d'avancement perpendiculaire au transport de la matrice 33 de moule effectué par le carrousel 32. La figure 5B et la figure 5C illustrent une alimentation selon un axe X d'avancement tangent au transport de la matrice 33 de moule effectué par le carrousel 32. La figure 5D illustre une alimentation selon un axe X d'avancement parallèle au transport de la matrice 33 de moule effectué par le carrousel 32.

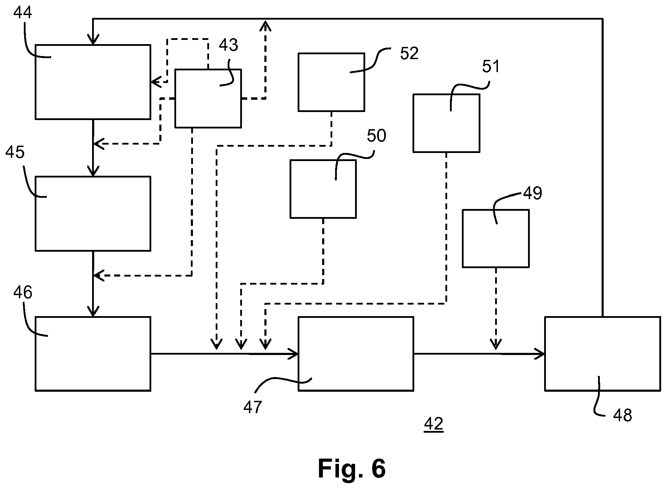

La figure 6 illustre un procédé **42** de fabrication continue de récipients 21 par thermoformage susceptible d'être réalisé par le dispositif 20, objet de la présente invention.

Le procédé 42 comporte les étapes répétées suivantes :
- une étape **43** facultative de découpage d'une bande 27 de matériau thermoformable selon un axe Y perpendiculaire à un axe X d'avancement de ladite bande 27 et selon un pas 26 variable et préalablement choisi, de sorte à former une feuille 23 de matériau thermoformable ayant un format f, ladite feuille 23 et la bande 27 s'étendant selon un plan P et le découpage 43 étant effectué avant, pendant ou après une étape **44** de chauffe respectivement de la feuille 23 et/ou de la bande 27 ;
- une étape **45** de pressage de la bande 27 ou de la feuille 23 avec une presse de formage 31 selon un axe Z de pressage perpendiculaire au plan P, dans une matrice 33 de moule portée par un carrousel 32 configuré pour effectuer un transport discontinu, en circuit fermé, de ladite matrice de moule 33, de sorte à thermoformer au moins un récipient 21 dans ladite matrice 33 de moule, la matrice 33 de moule définissant un format de récipient choisi en fonction du format f et ladite étape de pressage 45 étant directement précédée, effectuée en même temps ou directement suivie de l'étape de découpage 43 lorsque ladite étape de découpage 43 est effectuée après l'étape de chauffe 44 ;
- une étape **46** de transport de la matrice 33 par le carrousel 32 de sorte que la matrice 33 de moule comportant ledit au moins un récipient 21 thermoformé soit extraite de la presse de formage 31 ;
- une étape **47** d'arrêt du transport de la matrice 33 par le carrousel 32 et extraction dudit au moins un récipient 21 de la matrice 33 de moule ;
- une étape **48** de transport de la matrice (33) par le carrousel 32 et arrêt dudit transport de sorte que la matrice 33 de moule soit de nouveau positionnée au niveau de la presse de formage 31 pour une nouvelle étape de pressage 43.

Le procédé 42 comporte une étape supplémentaire facultative **49** d'arrêt du transport de la matrice 33 par le carrousel 32 et échange de la matrice 33 de moule portée par le carrousel 32 par une autre matrice 33 de moule définissant un même format de récipient 21 ou un format différent également choisi en fonction du format f, cette étape facultative 49 étant réalisée lorsque la matrice 33 de moule ne comporte pas de récipient 21.

L'étape 43 de découpage peut être réalisée avec l'appareil de découpage 25 du dispositif 20. L'étape 44 de chauffe peut être réalisée avec l'appareil de chauffe 29 du dispositif 20. L'étape 45 de pressage peut être réalisée avec la presse de formage 31 du dispositif 20. Lors de l'étape 47 d'arrêt du transport de la matrice 33 par le carrousel 32 et extraction dudit au moins un récipient 21 de la matrice 33 de moule, ladite extraction peut être effectuée par l'extracteur 34 du dispositif 20. Lors de l'étape supplémentaire facultative 49 d'arrêt du transport de la matrice 33 par le carrousel 32 et échange de la matrice 33 de moule portée par le carrousel 32 par une autre matrice 33 de moule, ledit échange peut être effectué par l'appareil échangeur 35 du dispositif 20.

Dans un mode de réalisation, ledit transport du carrousel 32 peut être un mouvement de rotation discontinu autour d'un axe R parallèle à l'axe Z, chaque arrêt du mouvement de rotation définissant la position d'un poste d'arrêt pour la matrice 33 de moule. Dans un tel mode de réalisation les transports et arrêts de transport de la matrice 33 par le carrousel 32 sont respectivement des rotations et arrêts de rotation du carrousel 32.

Le procédé 42 peut comporter en outre une étape **50** d'arrêt du transport de la matrice 33 par le carrousel 32 et remplissage au moins en partie dudit au moins un récipient 21 avec une composition, ledit remplissage étant effectué avant l'extraction dudit au moins un récipient 21 de la matrice 33 de moule. Ledit remplissage peut être effectué par au moins un appareil doseur 36 que comporte le dispositif 20.

Le procédé 42 peut comporter une étape **51** d'arrêt du transport de la matrice 33 par le carrousel 32 et fermeture dudit au moins un récipient 21 avec au moins un opercule 38 ladite fermeture étant effectuée avant l'extraction dudit au moins un récipient 21 de la matrice 33 de moule. Une telle étape 51 peut par exemple être décomposée en plusieurs sous-étapes, une première sous étape d'arrêt du transport de la matrice 33 par le carrousel 32, une deuxième sous-étape d'application d'au moins un opercule sur ledit au moins un récipient 21, une troisième sous-étape facultative de transport de la matrice 33 par le carrousel 32 et arrêt dudit transport, et une quatrième sous-étape de soudure dudit au moins un opercule 38 sur ledit au moins un récipient 21 de sorte à fermer ledit au moins un récipient 21.

La fermeture dudit au moins un récipient peut être réalisée avec l'appareil dépileur 37 et la presse à soudure 39 du dispositif 20. Plus précisément, la deuxième sous-étape peut être réalisée avec l'appareil dépileur 37 et la quatrième sous-étape avec la presse de soudure 39.

Le procédé 42 peut en outre comporter une étape supplémentaire **52** de séparation, au moins en partie, d'au moins un récipient 21 d'un autre récipient 21 lorsque ladite feuille 23 comporte plusieurs récipients 21 thermoformés. Une telle étape supplémentaire 52 peut intervenir avant extraction des récipients 21 de la matrice 33 de moule et peut être réalisée avec la presse de découpage 41.

Selon un exemple de mise en œuvre préféré, ledit au moins un récipient 21 thermoformé est maintenu dans la matrice 33 de moule par maintien de vide d'air entre ledit au moins un récipient 21 et ladite matrice 33 de moule. De préférence le vide d'air est maintenu à partir de l'étape 45 de pressage jusqu'à l'étape 47 d'arrêt du transport de la matrice 33 par le carrousel 32 et extraction dudit au moins un récipient 21 de la matrice 33 de moule.

## Revendications

1. Dispositif (20) de fabrication continue de récipients (21) par thermoformage comportant :
- un appareil d'alimentation (22) configuré pour alimenter un carrousel (32) avec au moins une feuille (23) de matériau thermoformable selon un axe X d'avancement, ladite feuille (23) ayant un format f et s'étendant selon un plan P ;
- un extracteur (34) de récipients (21) configuré pour extraire les récipients (21) du dispositif (20) de fabrication ;
- un appareil de chauffe (29) configuré pour chauffer la feuille (23) de matériau thermoformable ;
- une presse de formage (31) configurée pour effectuer un thermoformage d'au moins un récipient (21) par une action de pressage sur la feuille (23) chauffée selon un axe Z perpendiculaire au plan P ;
ledit carrousel (32) étant en outre configuré pour effectuer un transport discontinu, en circuit fermé, d'au moins une matrice de moule de la presse de formage (31), ladite matrice (33) définissant un format de récipient (21) choisi en fonction du format f et étant interchangeable avec une autre matrice (33) de moule, chaque arrêt du transport définissant la position d'un poste d'arrêt pour la matrice (33) de moule ;
au moins un arrêt du transport définissant la position d'un poste d'arrêt pour la matrice (33) de moule dans la presse de formage (31) de sorte à permettre le thermoformage dudit au moins un récipient (21) dans ladite matrice (33) de moule, au moins un arrêt du transport définissant la position d'un poste d'arrêt pour la matrice (33) de moule au niveau de l'extracteur (34) de récipients (21) de sorte à permettre l'extraction dudit au moins un récipient (21), et au moins un arrêt du transport définissant la position d'un poste d'arrêt pour la matrice (33) de moule permettant l'échange de ladite matrice (33) de moule que transporte le carrousel (32) avec une autre matrice (33) de moule, **caractérisé en ce que**
ledit dispositif de fabrication continue comporte en outre des moyens de maintenir, lorsque le récipient (21) a été thermoformé, un vide d'air entre le récipient et la matrice de moule pendant le refroidissement du récipient (21) jusqu'à température ambiante et durant le transport discontinu de la matrice (33) de moule par le carrousel (32).

2. Dispositif (20) de fabrication selon la revendication 1, dans lequel l'appareil d'alimentation (22) comporte une bande (27) continue de matériau thermoformable s'étendant selon le plan P et le dispositif (20) comporte un appareil de découpage (25) configuré pour découper ladite bande (27) selon un axe Y perpendiculaire à l'axe X et selon un pas (26) variable de sorte à former une feuille (23) de matériau thermoformable ayant le format f et s'étendant selon le plan P, ledit appareil de chauffe (29) étant configuré pour chauffer la bande (27) continue ou la feuille (23) et, la presse de formage (31) étant configurée pour effectuer un thermoformage d'au moins un récipient (21) par une action de pressage sur ladite feuille (23) chauffée ou ladite bande (27) continue chauffée selon un axe Z perpendiculaire au plan P.

3. Dispositif (20) de fabrication selon l'une quelconque des revendications 1 ou 2, dans lequel le carrousel (32) est configuré pour effectuer un transport discontinu, en circuit fermé, de plusieurs matrices (33) de moules de la presse de formage (31), chaque matrice (33) de moule définissant un format de récipient (21) choisi en fonction du format f et étant interchangeable avec une autre matrice (33) de moule, chaque arrêt du transport du carrousel (32) définissant la position d'un poste d'arrêt pour chaque matrice (33) de moule, au moins un arrêt du transport définissant la position d'un poste d'arrêt pour chaque matrice (33) de moule dans la presse de formage (31) de sorte à permettre le thermoformage dudit au moins un récipient (21) dans la matrice (33), au moins un arrêt du transport définissant la position d'un poste d'arrêt pour chaque matrice (33) de moule au niveau de l'extracteur (34) de récipients (21) de sorte à permettre l'extraction dudit au moins un récipient (21), et au moins un arrêt du transport définissant la position d'un poste d'arrêt pour chaque matrice (33) de moule permettant l'échange d'au moins une matrice (33) de moule que transporte le carrousel (32) avec une autre matrice (33) de moule.

4. Dispositif (20) de fabrication selon l'une quelconque des revendications 1 à 3, comportant un appareil échangeur (35) de matrices (33) de moules configuré pour échanger au moins une matrice (33) de moule que transporte le carrousel (32) par une autre matrice (33) de moule, au moins un arrêt du transport définissant la position d'un poste d'arrêt pour ladite au moins une matrice (33) de moule au niveau dudit appareil échangeur (35) de sorte à permettre l'échange par ledit appareil échangeur (35) de ladite au moins une matrice (33) de moule que transporte le carrousel (32) avec une autre matrice (33) de moule.

5. Dispositif (20) de fabrication selon l'une quelconque des revendications 1 à 4, comportant au moins un appareil doseur (36) configuré pour remplir au moins en partie le au moins un récipient (21) avec une composition, au moins un arrêt du transport du carrousel (32) définissant la position d'un poste d'arrêt pour chaque matrice (33) de moule au niveau de l'appareil doseur (36) de sorte à permettre audit appareil doseur (36) de remplir au moins en partie ledit au moins un récipient (21).

6. Dispositif (20) de fabrication selon l'une quelconque des revendications 1 à 5, comportant plusieurs appareils doseurs (36) chacun étant configuré pour remplir au moins en partie le au moins un récipient (21) avec une composition différente, des arrêts du transport du carrousel (32) définissant des positions de postes d'arrêts pour chaque matrice (33) de moule au niveau de chacun des appareils doseurs (36) de sorte à permettre à chacun des appareils doseurs (36) de remplir au moins en partie ledit au moins un récipient (21).

7. Dispositif (20) de fabrication selon l'une quelconque des revendications 1 à 6, comportant un système d'alimentation (37) configuré pour alimenter le dispositif (20) en opercules (38) et appliquer au moins un opercule (38) sur le au moins un récipient (21), au moins un arrêt du transport du carrousel (32) définissant la position d'un poste d'arrêt pour chaque matrice (33) de moule au niveau du système d'alimentation (37) de sorte à permettre audit système d'alimentation (37) d'appliquer au moins un opercule (38) sur ledit au moins un récipient (21).

8. Dispositif (20) de fabrication selon l'une quelconque des revendications 1 à 7, comportant une presse de soudure (39) configurée pour souder au moins un opercule (38) sur le au moins un récipient (21), au moins un arrêt du transport du carrousel (32) définissant la position d'un poste d'arrêt pour chaque matrice (33) de moule au niveau de la presse de soudure (39) de sorte à permettre à ladite presse de soudure (39) de souder au moins un opercule (38) sur ledit au moins un récipient (21).

9. Dispositif (20) de fabrication selon l'une quelconque des revendications 1 à 8, comportant une presse de découpage (41) configurée pour découper au moins une feuille (23) comprenant plusieurs récipients (21) thermoformés de sorte à séparer, au moins en partie, au moins un récipient (21) d'un autre récipient (21).

10. Dispositif (20) de fabrication selon l'une quelconque des revendications 1 à 9, comportant un système dépileur (40) configuré pour dépiler et insérer dans une matrice (33) de moule au moins un récipient (21) préformé, au moins un arrêt du carrousel (32) définissant la position d'un poste d'arrêt pour chaque matrice (33) de moule au niveau du système dépileur (40) de sorte à permettre audit système dépileur (40) de dépiler et insérer dans chaque matrice (33) de moule au moins un récipient (21) préformé.

11. Procédé (42) de fabrication continue de récipients (21) par thermoformage susceptible d'être réalisé avec le dispositif selon l'une quelconque des revendications 1 à 10, ledit procédé (42) comportant les étapes répétées suivantes :
- une étape (43) facultative de découpage d'une bande (27) continue de matériau thermoformable selon un axe Y perpendiculaire à un axe X d'avancement de ladite bande (27) et selon un pas (26) variable et préalablement choisi, de sorte à former une feuille (23) de matériau thermoformable ayant un format f, ladite feuille (23) et ladite bande (27) s'étendant selon un plan P et le découpage (43) étant effectué avant, pendant ou après une étape (44) de chauffe respectivement de la feuille (23) et/ou de la bande (27) ;
- une étape (45) de pressage de la bande (27) ou de la feuille (23) avec une presse de formage (31) selon un axe Z de pressage perpendiculaire au plan P, dans une matrice (33) de moule portée par un carrousel (32) configuré pour effectuer un transport discontinu, en circuit fermé, de ladite matrice de moule (33), de sorte à thermoformer au moins un récipient (21) dans ladite matrice (33) de moule, la matrice (33) de moule définissant un format de récipient choisi en fonction du format f et ladite étape de pressage (45) étant directement précédée, effectuée en même temps ou directement suivie de l'étape de découpage (43) lorsque ladite étape de découpage (43) est effectuée après l'étape de chauffe (44) ;
- une étape (46) de transport de la matrice (33) par le carrousel (32) de sorte que la matrice (33) de moule comportant ledit au moins un récipient (21) thermoformé soit extraite de la presse de formage (31), ledit au moins un récipient thermoformé étant maintenu dans la matrice de moule par maintien de vide d'air entre ledit au moins un récipient et ladite matrice de moule pendant le refroidissement du récipient (21) jusqu'à température ambiante et durant le transport discontinu de la matrice (33) de moule par le carrousel (32) ;
- une étape (47) d'arrêt du transport de la matrice (33) par le carrousel et extraction dudit au moins un récipient (21) de la matrice (33) de moule ;
- une étape (48) de transport de la matrice (33) par le carrousel et arrêt dudit transport de sorte que la matrice (33) de moule soit de nouveau positionnée au niveau de la presse de formage (31) pour une nouvelle étape de pressage (43) ;
ledit procédé comportant une étape supplémentaire facultative (49) d'arrêt du transport de la matrice (33) par le carrousel (32) et échange de la matrice (33) de moule portée par le carrousel (32) par une autre matrice (33) de moule définissant un même format de récipient (21) ou un format différent également choisi en fonction du format f, cette étape facultative (49) étant réalisée lorsque la matrice (33) de moule ne comporte pas de récipient (21).

12. Procédé (42) de fabrication continue selon la revendication 11, comportant en outre une étape (50) d'arrêt du transport de la matrice (33) par le carrousel (32) et remplissage au moins en partie dudit au moins un récipient (21) avec une composition, ledit remplissage étant effectué avant l'extraction dudit au moins un récipient (21) de la matrice (33) de moule.

13. Procédé (42) de fabrication continue selon l'une quelconque des revendications 11 ou 12, comportant en outre une étape (51) d'arrêt du transport de la matrice (33) par le carrousel (32) et fermeture dudit au moins un récipient (21) avec au moins un opercule (38), ladite fermeture étant effectuée avant l'extraction dudit au moins un récipient (21) de la matrice (33) de moule.

## Patentansprüche

1. Vorrichtung (20) zur kontinuierlichen Herstellung von Behältern (21) durch Thermoformung, Folgendes beinhaltend:
- eine Versorgungseinrichtung (22), die konfiguriert ist, um ein Karussell (32) mit mindestens einer Folie (23) aus einem thermoformbaren Material entlang einer Vortriebachse X zu versorgen, wobei die Folie (23) ein Format f aufweist und sich entlang einer Ebene P erstreckt;
- einen Abzieher (34) von Behältern (21), der konfiguriert ist, um die Behälter (21) von der Vorrichtung (20) zur Herstellung abzuziehen;
- eine Heizeinrichtung (29), die konfiguriert ist, um die Folie (23) aus thermoformbarem Material zu erhitzen;
- eine Formgebungspresse (31), die konfiguriert ist, um eine Thermoformung mindestens eines Behälters (21) durch einen Pressvorgang auf die erhitzte Folie (23) entlang einer zur Ebene P senkrechten Achse Z durchzuführen; wobei das Karussell (32) weiter konfiguriert ist, um einen diskontinuierlichen Transport im geschlossenen Kreis mindestens einer Formmatrize der Formgebungspresse (31) durchzuführen, wobei die Matrize (33) ein Behälterformat (21) definiert, das je nach Format f ausgewählt wird, und gegen eine andere Formmatrize (33) austauschbar ist, wobei jeder Halt des Transports die Position einer Haltestation für die Formmatrize (33) definiert;
mindestens ein Halt des Transports die Position einer Haltestation für die Formmatrize (33) in der Formgebungspresse (31) definiert, um die Thermoformung des mindestens einen Behälters (21) in der Formmatrize (33) zu ermöglichen, mindestens ein Halt des Transports die Position einer Haltestation für die Formmatrize (33) im Bereich des Abziehers (34) von Behältern (21) definiert, um das Abziehen des mindestens einen Behälters (21) zu ermöglichen, und mindestens ein Halt des Transports die Position einer Haltestation für die Formmatrize (33) definiert, die den Austausch der Formmatrize (33), die das Karussell (32) transportiert, gegen eine andere Formmatrize (33) ermöglicht, **dadurch gekennzeichnet, dass** die Vorrichtung zur kontinuierlichen Herstellung weiter Mittel zum Halten, wenn der Behälter (21) thermogeformt worden ist, eines Luftvakuums zwischen dem Behälter und der Formmatrize beim Abkühlen des Behälters (21) bis auf eine Umgebungstemperatur und beim diskontinuierlichen Transport der Formmatrize (33) durch das Karussell (32) beinhaltet.

2. Vorrichtung (20) zur Herstellung nach Anspruch 1, wobei die Versorgungseinrichtung (22) ein kontinuierliches Band (27) aus thermoformbarem Material beinhaltet, das sich entlang der Ebene P erstreckt, und die Vorrichtung (20) eine Schneideinrichtung (25) beinhaltet, die zum Schneiden des Bandes (27) entlang einer zur Achse X senkrechten Achse Y und entsprechend einer variablen Teilung (26) konfiguriert ist, um eine Folie (23) aus thermoformbarem Material zu bilden, die ein Format f aufweist, und sich entlang der Ebene P erstreckt, wobei die Heizeinrichtung (29) konfiguriert ist, um das kontinuierliche Band (27) oder die Folie (23) zu erhitzen, und die Formgebungspresse (31) konfiguriert ist, um eine Thermoformung mindestens eines Behälters (21) durch einen Pressvorgang auf die erhitzte Folie (23) oder das erhitzte kontinuierliche Band (27) entlang einer zur Ebene P senkrechten Achse Z durchzuführen.

3. Vorrichtung (20) zur Herstellung nach einem der Ansprüche 1 oder 2, wobei das Karussell (32) konfiguriert ist, um einen diskontinuierlichen Transport in geschlossenem Kreis mehrerer Matrizen (33) von Formen der Formgebungspresse (31) durchzuführen, wobei jede Formmatrize (33) ein Behälterformat (21) definiert, das je nach Format f ausgewählt wird, und gegen eine andere Formmatrize (33) austauschbar ist, wobei jeder Halt des Transports des Karussells (32) die Position einer Haltestation für jede Formmatrize (33) definiert, mindestens ein Halt des Transports die Position einer Haltestation für jede Formmatrize (33) in der Formgebungspresse (31) definiert, um die Thermoformung des mindestens einen Behälters (21) in der Matrize (33) zu ermöglichen, mindestens ein Halt des Transports die Position einer Haltestation für jede Formmatrize (33) im Bereich des Abziehers (34) von Behältern (21) definiert, um das Abziehen des mindestens einen Behälters (21) zu ermöglichen, und mindestens ein Halt des Transports die Position einer Haltestation für jede Formmatrize (33) definiert, die den Austausch mindestens einer Formmatrize (33), die das Karussell (32) transportiert, gegen eine andere Formmatrize (33) ermöglicht.

4. Vorrichtung (20) zur Herstellung nach einem der Ansprüche 1 bis 3, eine Tauschereinrichtung (35) von Formmatrizen (33) beinhaltend, die konfiguriert ist, um mindestens eine Formmatrize (33), die das Karussell (32) transportiert, gegen eine andere Formmatrize (33) zu tauschen, wobei mindestens ein Halt des Transports die Position einer Haltestation für die mindestens eine Formmatrize (33) im Bereich der Tauschereinrichtung (35) definiert, um den Tausch durch die Tauschereinrichtung (35) der mindestens einen Formmatrize (33), die das Karussell (32) transportiert, gegen eine andere Formmatrize (33) zu ermöglichen.

5. Vorrichtung (20) zur Herstellung nach einem der Ansprüche 1 bis 4, mindestens eine Dosiereinrichtung (36) beinhaltend, die konfiguriert ist, um den mindestens einen Behälter (21) mindestens teilweise mit einer Zusammensetzung zu füllen, wobei mindestens ein Halt des Transports des Karussells (32) die Position einer Haltestation für jede Formmatrize (33) im Bereich der Dosiereinrichtung (36) definiert, um es der Dosiereinrichtung (36) zu ermöglichen, den mindestens einen Behälter (21) mindestens teilweise zu füllen.

6. Vorrichtung (20) zur Herstellung nach einem der Ansprüche 1 bis 5, mehrere Dosiereinrichtungen (36) beinhaltend, von denen jede konfiguriert ist, um den mindestens einen Behälter (21) mindestens teilweise mit einer unterschiedlichen Zusammensetzung zu füllen, wobei Halte des Transports des Karussells (32) Positionen von Haltestationen für jede Formmatrize (33) im Bereich jeder der Dosiereinrichtungen (36) definieren, um es jeder der Dosiereinrichtungen (36) zu ermöglichen, den mindestens einen Behälter (21) mindestens teilweise zu füllen.

7. Vorrichtung (20) zur Herstellung nach einem der Ansprüche 1 bis 6, ein Versorgungssystem (37) beinhaltend, das konfiguriert ist, um die Vorrichtung (20) mit Deckeln (38) zu versorgen, und mindestens einen Deckel (38) auf den mindestens einen Behälter (21) aufzusetzen, wobei mindestens ein Halt des Transports des Karussells (32) die Position einer Haltestation für jede Formmatrize (33) im Bereich des Versorgungssystems (37) definiert, um es dem Versorgungssystem (37) zu ermöglichen, mindestens einen Deckel (38) auf den mindestens einen Behälter (21) aufzusetzen.

8. Vorrichtung (20) zur Herstellung nach einem der Ansprüche 1 bis 7, eine Schweißpresse (39) beinhaltend, die konfiguriert ist, um mindestens einen Deckel (38) auf den mindestens einen Behälter (21) zu schweißen, wobei mindestens ein Halt des Transports des Karussells (32) die Position einer Haltestation für jede Formmatrize (33) im Bereich der Schweißpresse (39) definiert, um es der Schweißpresse (39) zu ermöglichen, mindestens einen Deckel (38) auf den mindestens einen Behälter (21) zu schweißen.

9. Vorrichtung (20) zur Herstellung nach einem der Ansprüche 1 bis 8, eine Schneidpresse (41) beinhaltend, die konfiguriert ist, um mindestens eine Folie (23) zu schneiden, die mehrere thermogeformte Behälter (21) umfasst, um mindestens einen Behälter (21) teilweise von einem anderen Behälter (21) zu trennen.

10. Vorrichtung (20) zur Herstellung nach einem der Ansprüche 1 bis 9, mindestens ein Entstaplersystem (40) beinhaltend, das konfiguriert ist, um mindestens einen vorgeformten Behälter (21) zu entstapeln und in eine Formmatrize (33) einzuführen, wobei mindestens ein Halt des Karussells (32) die Position einer Haltestation für jede Formmatrize (33) im Bereich des Entstaplersystems (40) definiert, um es dem Entstaplersystem (40) zu ermöglichen, mindestens einen vorgeformten Behälter (21) zu entstapeln und in eine Formmatrize (33) einzuführen.

11. Verfahren (42) zur kontinuierlichen Herstellung von Behältern (21) durch Thermoformung, das imstande ist, mit der Vorrichtung nach einem der Ansprüche 1 bis 10 umgesetzt zu werden, wobei das Verfahren (42) die folgenden wiederholten Schritte beinhaltet:
- einen fakultativen Schritt (43) des Schneidens eines kontinuierlichen Bandes (27) aus thermoformbarem Material entlang einer zu einer Vortriebsachse X senkrechten Achse Y des Bandes (27), und entlang einer variablen Teilung (26) und vorab derart ausgewählt, um eine Folie (23) aus thermoformbarem Material zu bilden, die ein Format f aufweist, wobei sich die Folie (23) und das Band (27) entlang einer Ebene P erstrecken, und der Schnitt (43) vor, während oder nach einem Schritt (44) des Erhitzens jeweils der Folie (23) und/ oder des Bandes (27) durchgeführt wird;
- einen Schritt (45) des Pressens des Bandes (27) oder der Folie (23) mit einer Formgebungspresse (31) entlang einer zur Ebene P senkrechten Pressachse Z, in einer Formmatrize (33), die von einem Karussell (32) getragen wird, das konfiguriert ist, um einen diskontinuierlichen Transport im geschlossenen Kreis der Formmatrize (33) durchzuführen, um in der Formmatrize (33) mindestens einen Behälter (21) zu thermoformen, wobei die Formmatrize (33) ein Behälterformat definiert, das je nach Format f ausgewählt wird, und dem Pressschritt (45) direkt der Schneidschritt (43) vorangeht, er gleichzeitig mit diesem oder direkt danach ausgeführt wird, wenn der Schneidschritt (43) nach dem Heizschritt (44) durchgeführt wird;
- einen Schritt (46) des Transportierens der Matrize (33) durch das Karussell (32), sodass die Formmatrize (33), die den mindestens einen thermogeformten Behälter (21) beinhaltet, aus der Formgebungspresse (31) abgezogen wird, wobei der mindestens eine thermogeformte Behälter durch Halten eines Luftvakuums zwischen dem mindestens einen Behälter und der Formmatrize beim Abkühlen des Behälters (21) bis auf eine Umgebungstemperatur und beim diskontinuierlichen Transport der Formmatrize (33) durch das Karussell (32) gehalten wird;
- einen Schritt (47) des Anhaltens des Transports der Matrize (33) durch das Karussell, und Abziehen des mindestens einen Behälters (21) von der Formmatrize (33);
- einen Schritt (48) des Transportierens der Matrize (33) durch das Karussell und Anhalten des Transports sodass die Formmatrize (33) für einen neuen Pressschritt (43) erneut im Bereich der Formgebungspresse (31) positioniert ist; wobei das Verfahren einen zusätzlichen fakultativen Schritt (49) des Anhaltens des Transports der Matrize (33) durch das Karussell (32) und des Tauschens der durch das Karussell (32) getragenen Formmatrize (33) gegen eine andere Formmatrize (33) beinhaltet, die ein gleiches Behälterformat (21) oder ein unterschiedliches Format, ebenfalls je nach Format f ausgewählt, definiert, wobei dieser fakultative Schritt (49) ausgeführt wird, wenn die Formmatrize (33) keinen Behälter (21) beinhaltet.

12. Verfahren (42) zur kontinuierlichen Herstellung nach Anspruch 11, weiter einen Schritt (50) des Anhaltens des Transports der Matrize (33) durch das Karussell (32) und mindestens teilweise Füllens des mindestens einen Behälters (21) mit einer Zusammensetzung beinhaltet, wobei die Füllung vor dem Abziehen des mindestens einen Behälters (21) von der Formmatrize (33) durchgeführt wird.

13. Verfahren (42) zur kontinuierlichen Herstellung nach einem der Ansprüche 11 oder 12, weiter einen Schritt (51) des Anhaltens des Transports der Matrize (33) durch das Karussell (32) und Schließens des mindestens einen Behälters (21) mit mindestens einem Deckel (38) beinhaltet, wobei das Schließen vor dem Abziehen des mindestens einen Behälters (21) von der Formmatrize (33) durchgeführt wird.

## Claims

1. Device (20) for the continuous manufacture of receptacles (21) by thermoforming, including:
- a feed apparatus (22) configured to feed a carousel (32) with at least one sheet (23) of thermoformable material along a travel axis X, said sheet (23) having a format f and extending along a plane P;
- an extractor (34) for receptacles (21) configured to extract the receptacles (21) from the manufacturing device (20) ;
- a heating apparatus (29) configured to heat the sheet (23) of thermoformable material;
- a forming press (31) configured to implement thermoforming of at least one receptacle (21) by a pressing action on the heated sheet (23) along an axis Z perpendicular to the plane P;
said carousel (32) furthermore being configured to implement a discontinuous transport, in closed circuit, of at least one mould die of the forming press (31), said die (33) defining a receptacle format (21) chosen according to the format f and being interchangeable with another mould die (33), each stoppage of the transport defining the position of a stop station for the mould die (33);
at least one stoppage of transport defining the position of a stop station for the mould die (33) in the forming press (31) so as to allow the thermoforming of said at least one receptacle (21) in said mould die (33), at least one stoppage of transport defining the position of a stop station for the mould die (33) at the extractor (34) for receptacles (21) so as to allow the extraction of said at least one receptacle (21), and at least one stoppage of transport defining the position of a stop station for the mould die (33) allowing the exchange of said mould die (33) transported by the carousel (32) with another mould die (33), **characterised in that** said continuous manufacturing device further includes means for maintaining, when the receptacle (21) has been thermoformed, a vacuum between the receptacle and the mould die during the cooling of the receptacle (21) to ambient temperature and during the discontinuous transport of said mould die (33) by the carousel (32).

2. Manufacturing device (20) according to claim 1, wherein the feed apparatus (22) includes a continuous strip (27) of thermoformable material extending along the plane P and the device (20) includes a cropping apparatus (25) configured to crop said strip (27) along an axis Y perpendicular to the axis X and at a variable pitch (26) so as to form a sheet (23) of thermoformable material having the format f and extending along the plane P, said heating apparatus (29) being configured to heat the continuous strip (27) or the sheet (23) and the forming press (31) being configured to implement thermoforming of at least one receptacle (21) by a pressing action on said heated sheet (23) or said heated continuous strip (27) along an axis Z perpendicular to the plane P.

3. Manufacturing device (20) according to either one of claims 1 or 2, wherein the carousel (32) is configured to implement a discontinuous transport, in closed circuit, of a plurality of mould dies (33) of the forming press (31), each mould die (33) defining a receptacle format (21) chosen according to the format f and being interchangeable with another mould die (33), each stoppage of the transport of the carousel (32) defining the position of a stop station for each mould die (33), at least one stoppage of transport defining the position of a stop station for each mould die (33) in the forming press (31) so as to allow the thermoforming of said at least one receptacle (21) in the die (33), at least one stoppage of transport defining the position of a stop station for each mould die (33) at the extractor (34) for receptacles (21) so as to allow the extraction of said at least one receptacle (21), and at least one stoppage of transport defining the position of a stop station for each mould die (33) allowing the exchange of at least one mould die (33) transported by the carousel (32) with another mould die (33).

4. Manufacturing device (20) according to any one of claims 1 to 3, including an apparatus (35) exchanging mould dies (33) configured to exchange at least one mould die (33) transported by the carousel (32) by another mould die (33), at least one stoppage of transport defining the position of a stop station for said at least one mould die (33) at said exchanger apparatus (35) so as to allow the exchange by said exchanger apparatus (35) of said at least one mould die (33) transported by the carousel (32) with another mould die (33).

5. Manufacturing device (20) according to any one of claims 1 to 4, including at least one metering device (36) configured to at least partly fill the at least one receptacle (21) with a composition, at least one stoppage of the transport of the carousel (32) defining the position of a stop station for each mould die (33) at the metering device (36) so as to enable said metering device (36) to at least partly fill said at least one receptacle (21).

6. Manufacturing device (20) according to any one of claims 1 to 5, including a plurality of metering devices (36) each being configured to at least partly fill the at least one receptacle (21) with a different composition, stoppages of the transport of the carousel (32) defining positions of stop stations for each mould die (33) at each of the metering devices (36) so as to enable each of the metering devices (36) to at least partly fill said at least one receptacle (21).

7. Manufacturing device (20) according to any one of claims 1 to 6, including a feed system (37) configured to feed the device (20) with lids (38) and to apply at least one lid (38) to the at least one receptacle (21), at least one stoppage of the transport of the carousel (32) defining the position of a stop station for each mould die (33) at the feed system (37) so as to enable said feed system (37) to apply at least one lid (38) to said at least one receptacle (21).

8. Manufacturing device (20) according to any one of claims 1 to 7, including a welding press (39) configured to weld at least one lid (38) on the at least one receptacle (21), at least one stoppage of the transport of the carousel (32) defining the position of a stop station for each mould die (33) at the welding press (39) so as to enable said welding press (39) to weld at least one lid (38) on said at least one receptacle (21).

9. Manufacturing device (20) according to any one of claims 1 to 8, including a cropping press (41) configured to crop at least one sheet (23) comprising a plurality of thermoformed receptacles (21) so as to at least partly separate at least one receptacle (21) from another receptacle (21).

10. Manufacturing device (20) according to any one of claims 1 to 9, including a destacking system (40) configured to destack and insert, in a mould die (33), at least one preformed receptacle (21), at least one stoppage of the carousel (32) defining the position of a stop station for each mould die (33) at the destacking system (40) so as to enable said destacking system (40) to destack and insert in each mould die (33) at least one preformed receptacle (21).

11. Method (42) for the continuous manufacturing of receptacles (21) by thermoforming able to be implemented with the device according to any one of claims 1 to 10, said method (42) including the following repeated steps:
- an optional step (43) of cropping a continuous strip (27) of thermoformable material along an axis Y perpendicular to an axis X of travel of said strip (27) and at a variable and previously chosen pitch (26), so as to form a sheet (23) of thermoformable material having a format f, said sheet (23) and said strip (27) extending along a plane P and the cropping (43) being implemented before, during or after a step (44) of heating respectively the sheet (23) and/or the strip (27);
- a step (45) of pressing the strip (27) or the sheet (23) with a forming press (31) on a pressing axis Z perpendicular to the plane P, in a mould die (33) carried by a carousel (32) configured to implement a discontinuous transport, in closed circuit, of said mould die (33), so as to thermoform at least one receptacle (21) in said mould die (33), the mould die (33) defining a receptacle format selected according to the format f and said pressing step (45) being directly preceded, implemented at the same time as or directly followed by the cropping step (43) when said cropping step (43) is implemented after the heating step (44);
- a step (46) of transporting the die (33) by the carousel (32) so that the mould die (33) including said at least one thermoformed receptacle (21) is extracted from the forming press (31), said at least one thermoformed receptacle being held in the mould die by vacuum holding between said at least one receptacle and said mould die during the cooling of the receptacle (21) to ambient temperature and during the discontinuous transport of the mould die (33) by the carousel (32);
- a step (47) of stopping the transport of the die (33) by the carousel and extracting said at least one receptacle (21) from the mould die (33);
- a step (48) of transporting the die (33) by the carousel and stopping said transport so that the mould die (33) is once again positioned at the forming press (31) for a new pressing step (43);
said method including an optional supplementary step (49) of stopping the transport of the die (33) by the carousel (32) and exchanging the mould die (33) carried by the carousel (32) by another mould die (33) defining the same receptacle format (21) or a different format also selected according to the format f, this optional step (49) being performed when the mould die (33) does not include a receptacle (21).

12. Continuous manufacturing method (42) according to claim 11, further including a step (50) of stopping the transport of the die (33) by the carousel (32) and at least partially filling said at least one receptacle (21) with a composition, said filling being implemented before said at least one receptacle (21) is extracted from the mould die (33).

13. Continuous manufacturing method (42) according to either one of claims 11 or 12, further including a step (51) of stopping the transport of the die (33) by the carousel (32) and closing said at least one receptacle (21) with at least one lid (38), said closure being implemented before said at least one receptacle (21) is extracted from the mould die (33).
